# EUROPÄISCHE PATENTSCHRIFT

(11) **EP 2 801 853 B1**
(45) Veröffentlichungstag und Bekanntmachung des Hinweises auf die Patenterteilung: **19.02.2020**
(21) Anmeldenummer: 14167145.3
(22) Anmeldetag: 06.05.2014
(51) Int. Cl.: G02B 19/00, F21V 5/00, F21V 5/02, F21Y 103/10, F21Y 115/10

(54) **LED-Leuchte mit Entblendung**
LED light with glare reduction
Dispositif d'éclairage DEL avec anti-éblouissement

(30) Priorität: 06.05.2013 DE 102013208292
(43) Veröffentlichungstag der Anmeldung: 12.11.2014
(73) Patentinhaber: ITZ Innovations- und Technologiezentrum GmbH, 59759 Arnsberg (DE)
(72) Erfinder: Lewers, Christoph, 59821 Arnsberg (DE)
(74) Vertreter: Lippert Stachow Patentanwälte Rechtsanwälte

(56) Entgegenhaltungen:
- WO-A1-2011/086104
- DE-A1-102011 017 580
- US-A- 2 474 317

## Beschreibung

Die Erfindung betrifft eine Leuchte, insbesondere eine Feuchtraumleuchte, mit einem länglichen Grundkörper und einer wannenförmigen, transparenten Abdeckung, wobei der Grundkörper das Leuchtmittel, umfassend eine Mehrzahl von in Längsrichtung hintereinander angeordnete Leuchtdioden trägt und die Abdeckung an beiden Längsseiten zumindest eine Lichtlenkzone umfasst mit einer Mehrzahl von, an der Innenmantelfläche der Abdeckung angeordnete und quer zur Längsrichtung aufeinander folgende, lichtbrechende Strukturen jeweils in Form von längs verlaufenden prismatischen Strukturen und einer an der Außenmantelfläche der Abdeckung angeordneten lichtbrechenden Struktur bzw. Gestaltung.

Eine Leuchte ist beispielsweise in der Offenlegungsschrift DE 10 2011 017 580 A1 offenbart. Diese beschreibt eine Anordnung, bei welcher eine häufig in derartigen Leuchten verwendete Leuchtstofflampe als Lichtquelle durch eine Reihenanordnung von Leuchtdioden ersetzt wird. Um eine gewünschte Lichtverteilung beizubehalten bzw. einer Lichtverteilung innerhalb der Leuchte anzupassen, welche sich bei Verwendung einer Leuchtstofflampe in dieser Leuchte einstellt, wird vorgeschlagen, zusätzlich zu der als lichtlenkendes Element vorgesehenen Abdeckung der Leuchte ein weiteres optisches Element mit Lichtlenkfunktion vorzusehen, welches im Innenraum der Abdeckung angeordnet ist und die Reihe von hintereinander angeordneten LEDs zumindest in deren Abstrahlbereich umgibt.

Der Herstellungsaufwand einer derartigen Leuchte ist durch die Notwendigkeit der Verwendung eines weiteren optischen Elementes zur Erzielung der gewünschten Lichtverteilung vergleichsweise hoch. Dagegen kann der Austausch der transparenten Abdeckung durch eine opake Abdeckung hier keine Abhilfe schaffen, da insbesondere bei der Verwendung von Hochleistungs-LEDs oder LEDs mit mittlerer Leistung neuerer Bauart und damit verbundenem erhöhten Lichtstrom die auf dem Gebiet vorgegebene lichttechnische Vorgaben, insbesondere zur Vermeidung von Blendung durch die Lampe, nicht eingehalten werden können.

Eine gattungsbildende Leuchte ist in der Offenlegungsschrift WO 2011/086104 A1 offenbart. In Weiterbildung der obenstehend beschriebenen Leuchte sind die Leuchtdioden etwa auf einer Schnittgerade zwischen der Längsschnittebene der Abdeckung und deren Öffnungsebene angeordnet, wobei von den Leuchtdioden abgestrahltes Licht direkt, d.h. ohne Zwischenschaltung eines weiteren optischen Elementes auf die Innenmantelfläche der Abdeckung trifft. Diese Gestaltung der gattungsgemäßen Leuchte führt zu einer kompakten Bauweise in Bezug auf die Abmessungen der Abdeckung, da das Leuchtmittel auf bzw. nahe zur Öffnungsebene der Abdeckung angeordnet ist.

Der Erfindung liegt die Aufgabe zugrunde, die gattungsgemäße Leuchte zu verbessern, insbesondere einen homogeneren Lichteindruck zu erzeugen.

Diese Aufgabe löst die vorliegende Erfindung mit einer Leuchte, bei welcher längs verlaufende prismatische Strukturen einer Lichtlenkzone in Längsrichtung moduliert sind zum Auffächern der Lichtanteile der LEDs in Längsrichtung der Leuchte. Dadurch, dass die längs verlaufenden und quer zur Längsrichtung an der Innenmantelfläche aufeinanderfolgend angeordneten prismatischen Strukturen der betreffenden Lichtlenkzone, welche für eine gewünschte Lichtstärkeverteilung senkrecht zur Längsachse der Leuchte sorgen, zusätzlich in Längsrichtung moduliert sind, erfolgt eine homogenere Lichtabgabe der Leuchte. Der Ausdruck "moduliert" bzw. "Modulation" meint dabei eine wiederkehrende, insbesondere periodische Änderung eines Parameters der prismatischen Strukturen in Längsrichtung, welche dazu führt, dass die Brechungseigenschaften der Prismenanordnungen so verändert werden, dass eine Auffächerung der Lichtanteile einzelner LEDs in Längsrichtung resultiert. Damit kann beim Betrachter der Eindruck eines Leuchtmittels mit mehreren Punktlichtquellen vermieden oder zumindest vermindert werden und stattdessen für einen Betrachter der erfindungsgemäßen Leuchte der Eindruck eines in Längsrichtung durchgehenden Leuchtmittels erzeugt werden.

Besonders zweckmäßig ist es, wenn die längs verlaufenden und quer zur Längsrichtung an der Innenmantelfläche aufeinanderfolgend angeordneten prismatischen Strukturen an die Verwendung der in Reihe und in der konstruktionsbedingt in der Regel beabstandet angeordneten punktförmigen Lichtquellen (LEDs) durch Modulation derart angepasst werden, dass ein Auffächern der Lichtanteile der einzelnen LEDs in Längsrichtung erfolgt. Die zunächst lineare Prismenanordnung wird durch die Modulation der prismatischen Strukturen in eine Nichtlineare überführt.

Der Begriff Öffnungsebene der Abdeckung bezeichnet eine Ebene, welche im Wesentlichen durch den vom Scheitel der Abdeckung entfernten, umlaufenden Rand der optisch wirksamen Außen- und Innenmantelfläche der Abdeckung festgelegt wird.

Es liegt im Rahmen der Erfindung, wenn die Reihenanordnung von LEDs geringfügig unterhalb oder oberhalb der Öffnungsebene der Abdeckung verläuft, wie 2 - 4 cm, insbesondere 1 - 3 cm. Besonders vorteilhaft ist es, wenn die LEDs nicht mehr als 1 cm oberhalb bzw. nicht mehr als 3 cm unterhalb der Öffnungsebene der Abdeckung angeordnet sind. Dabei kann zweckmäßigerweise die vertikale Lage einer LED durch deren Licht emittierender Oberfläche festgelegt werden. Diese Licht emittierende Oberfläche der LED kann je nach Ausführungsform eine Halbleiteroberfläche der LED sein.

Im Rahmen der Erfindung können LEDs bzw. die in Längsrichtung hintereinander angeordnete LEDs in bestimmten Ausführungsformen der erfindungsgemäßen Leuchte zumindest abschnittsweise jeweils ein lichtdurchlässiges, insbesondere ein transparentes Gehäuse wie ein Kunststoff- oder ein Glasgehäuse umfassen, wobei das LED-Licht über die Grenzfläche Gehäusematerial-Luft in den durch den Grundkörper und die Abdeckung gebildeten Innenraum der Leuchte eintritt. Insofern kann durch entsprechende Gestaltungen wie die Gestaltung des Gehäuses der LED und/oder durch Verwendung eines internen Reflektors, die LED selbst schon eine gewisse Lichtlenkfunktion aufweisen bzw. bereitstellen. Darüber hinaus liegt es auch im Rahmen der Erfindung, die Mehrzahl der in Längsrichtung hintereinander angeordneten LEDs als ein einzelnes Bauelement auszubilden, z.B. im Rahmen einer COB (Chip on Bord)-Anordnung, welche mit einem transparenten Material vergossen sein kann. In derartigen Ausführungen ist die jeweilige lichtlenkende Funktion als eine Eigenschaft der LEDs bzw. der Reihenanordnung der LEDs anzusehen und wird insofern durch eine entsprechende Gestaltung der LEDs bzw. der Reihenanordnung der LEDs hervorgerufen. Die für die erfindungsgemäße Leuchte verwendeten LEDs können ferner eine Konversionsleuchtschicht aufweisen.

Die Angabe "längs verlaufende prismatische Struktur" ist erfindungsgemäß sehr allgemein zu verstehen und nicht auf mathematisch ideale Prismenanordnungen beschränkt. Sie kann insbesondere eine rippenartige Struktur darstellen, welche Abschnitte oder Segmente aufweist, die beispielsweise prismenartig, pyramidal oder auch kegelähnlich aufgebaut sind.

Das Leuchtmittel, umfassend eine Mehrzahl von in Längsrichtung hintereinander angeordneten Leuchtdioden kann am Grundkörper direkt oder indirekt befestigt sein, beispielsweise indirekt mittels einer Platine, auf welcher die Leuchtdioden angebracht sind.

Zweckmäßige Weiterbildungen und erfindungswesentliche Merkmale sind in der allgemeinen Beschreibung, den Unteransprüchen sowie der speziellen Beschreibung angegeben.

Eine hohe Flexibilität bei der Einstellung der notwendigen Brechung innerhalb einer Lichtlenkzone durch Gestaltung der Innenmantelfläche sowie der Außenmantelfläche der Abdeckung kann erreicht werden, wenn auch auf der Außenfläche der Abdeckung besondere lichtbrechende Strukturen wie prismatische Strukturen, ähnlich wie an der Innenmantelfläche vorgesehen werden. Andererseits kann es auch zweckmäßig sein, die optisch als Brechfläche wirkende Außenmantelfläche der Abdeckung unstrukturiert, d.h. glatt zu gestalten, sodass die Gefahr der Verschmutzung vermindert bzw. eine Reinigung erleichtert wird. Bei einer derartigen Ausführung kann die Außenmantelfläche zumindest abschnittsweise eben oder auch gekrümmt sein, deren Gestalt dann als einfache, unstrukturierte, lichtbrechende Fläche an der Außenmantelfläche der Abdeckung wirkt.

Die erfindungsgemäße Anordnung der in Längsrichtung hintereinander angeordneten Leuchtdioden relativ zur Abdeckung am Grundkörper der Leuchte sowie die Tatsache, dass die Leuchtdioden in Bezug auf die Quer- bzw. Längsabmessungen der Abdeckung als Punktstrahler angesehen werden können, ermöglicht eine sehr genaue Einstellung einer vorgegebenen Abstrahlcharakteristik der Leuchte.

Beispielsweise kann vorgesehen sein, dass zum Bereitstellen einer Entblendung bei flachen Winkeln bis etwa 25 Grad - 30 Grad zur Öffnungsebene der Abdeckung eine zur Öffnungsebene nahegelegene, sich längs und sich in Richtung zum Scheitel über eine vorgegebene Höhe erstreckende Lichtlenkzone ausgebildet und eingerichtet ist zum Ablenken des aus dem vorgegebenen Winkelbereich, insbesondere aus einem Winkelbereich von etwa 0 - 30 Grad abgestrahlten direkten Lichtes der LEDs in eine Richtung, welche eine horizontale Ebene, insbesondere die Öffnungsebene schneidet. Besonders zweckmäßig ist es dabei, wenn das innerhalb des genannten Winkelbereichs von allen LEDs abgestrahlte direkte Licht so umgelenkt wird, dass es die Öffnungsebene der Abdeckung schneidet. Auf diese Weise kann das in diesem Winkelabschnitt der Abdeckung einfallende Licht durch entsprechend eingestellte Brechungseigenschaften der Abdeckung nach oben zur Decke gerichtet und zur indirekten Beleuchtung genutzt werden (Deckenaufhellung). Hierdurch wird eine Entblendung durch Erhöhung der Umgebungsleuchtdichten unterstützt und wirkt einem sog. Höhleneffekt entgegen. Je nach spezifischem Beleuchtungsproblem können auch andere Winkelbereiche ausgeblendet, d.h. das dort auftreffende direkte Licht der LEDs mit hoher Präzision in andere Winkelbereiche umgelenkt werden. Die erfindungsgemäß gestaltete Leuchte ermöglicht sehr niedrige UGR (Unified Glare Rating)-Werte, welche beispielsweise bei Arbeiten in Industrie und Handwerk, bei der Beleuchtung in Tiefgaragen oder gar für Unterrichtsräume gelten.

Eine besonders vorteilhafte Ausführungsform der Leuchte, insbesondere in Bezug auf deren Kompaktheit, ergibt sich bei einer Gestaltung, bei welcher die Außenmantelfläche der Abdeckung in der zur Öffnungsebene nahegelegene Lichtlenkzone in deren Rand, welcher dem Scheitel der Abdeckung zugewandt ist, eine Steigung α kleiner etwa 40 Grad zur Horizontalen im Einbauzustand aufweist.

Eine auch vorteilhafte Ausführungsform der Leuchte, insbesondere in Bezug auf deren Kompaktheit, ergibt sich bei einer Gestaltung, bei welcher die Außenmantelfläche der Abdeckung in der zur Öffnungsebene nahegelegene Lichtlenkzone im Bereich der Öffnungsebene der Abdeckung eine Steigung α1 zwischen 48 Grad und 88 Grad zur Horizontalen im Einbauzustand aufweist.

Wie vorstehend erläutert, kann diese Steigung an der Außenmantelfläche mit weiterem Abstand zur Öffnungsebene der Abdeckung abnehmen, sodass sich aufgrund der geringen Steigung der Außenmantelfläche scheitelnah eine flache, wannenartige Struktur der Abdeckung ergibt. Die genannte Steigung ist sowohl mit glatter Außenmantelfläche als auch mit einer Strukturierung der Außenmantelfläche der Abdeckung in Form von prismatischen Strukturen möglich.

Je nach spezieller Gestaltung dieser prismatischen Strukturen an der Innenmantelfläche der Abdeckung, dem verwendeten Material zur Gestaltung der Abdeckung sowie abhängig von der spezifischen Gestaltung der lichtbrechenden Anordnung an der Außenmantelfläche mit bzw. ohne Strukturierung wie prismatische Strukturen ist es erfindungsgemäß möglich, derartige flache Abdeckungen bei der erfindungsgemäßen Leuchte vorzusehen, bei welchen die optisch brechende Außenmantelfläche der Abdeckung in der zur Öffnungsebene nächstgelegenen Lichtlenkzone an deren Randabschnitt, welcher dem Scheitel der Abdeckung zugewandt ist, eine Steigung α2 zur Horizontalen im Einbauzustand aufweist, die zwischen 24 und 39 Grad, insbesondere zwischen 30 und 38 Grad liegt.

Zur Gestaltung der längs verlaufenden prismatischen Strukturen an der Innenmantelfläche der Abdeckung sind je nach Ausführungsform unterschiedliche spezifische Strukturen einsetzbar. Beispielsweise können die längs zur Leuchte verlaufenden prismatischen Strukturen an der Innenmantelfläche der Abdeckung einer Lichtlenkzone jeweils eine das einfallende Licht zur Öffnungsebene, d.h. zu einer horizontalen Ebene hin brechende Fläche, im Folgenden als Wirkfläche bezeichnet, aufweisen, welche als Lichteinkoppelfläche wirkt, wobei diese Wirkfläche je nach spezifischer Gestaltung eben, in einer anderen Ausführungsform jedoch gekrümmt oder auch abschnittsweise gekrümmt und abschnittsweise eben sein kann.

Insbesondere kann eine solche Wirkfläche grundsätzlich eben und an Übergangsbereichen zu einer anderen Wirkfläche gekrümmt sein. Dabei wird im Folgenden eine Wirkfläche als Hauptwirkfläche einer prismatischen Struktur bezeichnet, wenn über diese Wirkfläche der Hauptanteil des auf die prismatische Struktur bzw. auf ein prismatisches Segment dieser Struktur auftreffenden Lichtes in die Abdeckung unter Brechung des einfallenden Lichtstrahls eintritt. Dagegen wird eine Wirkfläche als Nebenwirkfläche einer prismatischen Struktur bezeichnet, wenn über diese Wirkfläche je nach Ausführungsform ein geringerer bzw. nur ein vernachlässigbarer Anteil des auf die prismatische Struktur bzw. auf ein prismatisches Segment dieser Struktur auftreffenden Lichtes in die Abdeckung unter Brechung des einfallenden Lichtstrahls eintritt. Die Angabe "vernachlässigbarer Anteil" kann je nach Ausführungsform bedeuten, dass der über die Nebenwirkflächen in die Abdeckung eintretende Lichtstrom weniger als 20%, insbesondere weniger als 10% des über die Hauptwirkflächen in die Abdeckung eintretenden Lichtstroms beträgt.

Eine einfache Gestaltung der prismatischen Struktur an der Innenmantelfläche der Abdeckung, welche beispielsweise die Herstellung der Abdeckung mittels eines Spritzguss- bzw. Spritzprägeverfahrens erlaubt, wird dadurch erreicht, dass diese prismatische Struktur der betreffenden Lichtlenkzone jeweils einen dreieckigen Querschnitt aufweisen, wobei Seitenflächen der Prismenabschnitte durch die jeweilige insbesondere abschnittsweise ebene Hauptwirkfläche sowie eine zugeordnete, insbesondere abschnittsweise ebene Nebenwirkfläche gebildet sind, und wobei sich alle Ebenen der Nebenwirkflächen einer Lichtlenkzone etwa am Ort der hintereinander angeordneten Lichtdioden, d.h. am Ort des Leuchtmittels schneiden. Der Begriff Nebenwirkfläche bezeichnet dabei wie erläutert eine Prismenfläche, welche im Vergleich zur Hauptwirkfläche kaum als Lichteinkoppelfläche wirkt, da hier weniger Lichtanteile bzw. diese vergleichsweise schräg einfallen.

Eine vorteilhafte Gestaltung von prismatischen Strukturen an der Innenmantelfläche der Abdeckung, welche eine besonders präzise Lichtsteuerung erlaubt, zeichnet sich dadurch aus, dass Nebenwirkflächen so ausgebildet ist, dass direktes Licht der LEDs im Wesentlichen parallel zur Oberfläche verläuft, sodass an diesen Nebenwirkfläche nur vernachlässigbar Licht in das Material der Abdeckung eingekoppelt wird. Stattdessen wird das Licht allein an einer Hauptwirkfläche der prismatischen Struktur bzw. eines prismatischen Segments eingekoppelt.

Zweckmäßigerweise weisen die das von den LEDs direkt einfallende Licht zur Öffnungsebene hin brechenden Hauptwirkflächen, welche je nach Ausführungsform eben und/oder auch gekrümmt sein können, zur Vertikalen einen Winkel γ zwischen 15 und 1 Grad, insbesondere < 5 Grad und > 1 Grad auf. Durch die Festlegung dieses Winkels kann einerseits eine leichte Entformbarkeit der Abdeckung aus einer zur Herstellung verwendeten Gießform bereitgestellt werden, da Hinterschneidungen in der Struktur der Innenmantelfläche der Abdeckung vermieden werden, andererseits kann durch Wahl dieses Winkels der Hauptwirkflächen eine weitere Abflachung der Abdeckung eingestellt werden. Je größer der Winkel zwischen den Hauptwirkflächen der prismatischen Strukturen und der Vertikalen eingestellt ist, umso flacher verlaufen öffnungsebenennahe Wandbereiche der wannenartigen Abdeckung zur Horizontalen und umgekehrt.

Ausgehend von der im Bereich der Öffnungsebene der Abdeckung vorliegenden Steigung der Außenmantelfläche der Abdeckung zur Horizontalen kann diese über einen vorgegebenen Bereich konstant und nachfolgend mit geringer werdenden Entfernung zum Scheitel der wannenförmigen Abdeckung kontinuierlich abnehmen. In einer anderen Gestaltung kann auch vorgesehen sein, ausgehend von einer vorgegebenen Steigung der Außenmantelfläche im Bereich der Öffnung diese Steigung kontinuierlich bis zum Scheitel abfallen zu lassen.

Insofern erlaubt es die erfindungsgemäß ausgestaltete Leuchte, eine an das jeweilige Beleuchtungsproblem bzw. das gewünschte Erscheinungsbild der Leuchte angepasste Gestaltung, wobei bei einer Änderung des Verlaufs der Außenmantelfläche und damit der äußeren Brechungsflächen zur Erzielung gewünschter Beleuchtungsverteilungen die spezifische Gestaltung der prismatischen Strukturen an der Innenmantelfläche angepasst werden können.

Zur Gestaltung der längs verlaufenden und quer zur Längsrichtung an der Innenmantelfläche übereinander angeordneten, nichtlinearen prismatischen Struktur kann diese eine Vielzahl von in Längsrichtung hintereinander angeordnete Prismensegmente oder prismenähnliche Segmente umfassen, wobei Wirkflächen benachbarter Segmente, welche das direkte Licht der LEDs brechen, den gleichen Winkel zur Vertikalen, jedoch einen unterschiedlichen Winkel zur Längsachsen aufweisen. Insbesondere kann einer der beiden Winkel β, der andere 180 - β betragen, wenn die Ausdehnung der Prismensegmente bzw. der äquivalenten Wirkflächen benachbarter Prismensegmente gleich ist. Der Winkel β kann beispielsweise zwischen 5 Grad und 30 Grad, insbesondere zwischen 10 Grad bis 25 Grad betragen. Die Wirkflächen können dabei in einer Ausführungsform eben und/oder gekrümmt ausgebildet sein. Durch eine Abfolge von derartigen, unterschiedlich orientierten Wirkflächen, welche in Bezug auf ihre Lichtführung in einer Ebene quer zur Längsachse der Leuchte gleich wirken, d.h. brechen, kann die beschriebene Modulation in Längsrichtung realisiert sein, was zu dem gewünschten optischen Eindruck führt. Prismenkanten benachbarter Prismensegmente bzw. prismenähnlicher Segmente können dabei in einem unterschiedlichen Winkel zur Längsachse verlaufen, sodass sich durch die Aneinanderreihung derartiger Segmente eine Zickzackanordnung der Segmente um eine Achse parallel zur Längsachse der Leuchte ergibt.

Eine nichtlineare prismatische Strukturierung, insbesondere an der Innenmantelfläche der Abdeckung kann durch eine V-förmige oder wellenförmige Struktur der inneren Mantelfläche der Abdeckung erzeugt sein. Jede der in Umfangsrichtung der Innenmantelfläche der Abdeckung übereinander angeordneten und in Längsrichtung sich erstreckenden prismatischen Strukturen einer Lichtlenkzone kann als nichtlineare Prismenanordnung ausgebildet sein mit ähnlicher oder gleicher Modulation der Strukturierung.

Zweckmäßigerweise ist die Periode der Modulation der prismatischen Strukturierung an den Abstand der in Reihe hintereinander angeordneten LEDs angepasst.

Aus ästhetischen, jedoch auch aus statischen Gründen kann es zweckmäßig sein, wenn die Abdeckung der erfindungsgemäßen Leuchte randseitig einen umlaufenden Quersteg aufweist, welcher auf der dem Scheitel der Abdeckung gegenüber liegenden Seite eine Anlagefläche zur Anlage an dem Leuchtengrundkörper bereitstellen kann, jedoch nicht in allen Ausführungen mit einer derartigen Anlagefläche versehen sein muss. Dabei kann es besonders zweckmäßig sein, wenn ein derartiger Quersteg am Rand der Abdeckung als optisch wirksames Element ausgebildet wird, um in Richtung der Horizontalen abgestrahltes Licht innenseitig aufzunehmen und radial nach außen abzugeben, wobei zweckmäßigerweise der Quersteg am radialen Rand eine abgeschrägte Kante aufweisen kann, um das in diesem Quersteg verlaufende Licht zur Vermeidung einer Blendung des Betrachters im Einbauzustand nach oben zur Decke abzulenken.

Für die erfindungsgemäß ausgebildete Leuchte ist eine Vielzahl von unterschiedlichen Gestaltungen des Leuchtmittels geeignet. Dabei kann die Mehrzahl von in Längsrichtung hintereinander angeordneten Leuchtdioden auch mehrere, beispielsweise zwei parallel verlaufende Reihenanordnungen von LEDs umfassen, welche beispielsweise auf einer Platine angeordnet sein können, die selbst am Grundkörper der Leuchte befestigt ist. Bei einer derartigen Gestaltung kann es zweckmäßig sein, dass Leuchtmittel am Grundkörper so anzuordnen, dass etwa die Schnittgerade zwischen der Längsschnittebene der Abdeckung und der Öffnungsebene der Abdeckung in Querrichtung mittig zum Leuchtmittel verläuft. Ferner kann es zweckmäßig sein, die parallel zueinander verlaufenden Reihenanordnungen von LEDs in Längsrichtung versetzt zueinander anzuordnen, sodass sich bei einer Betrachtung quer zur Längsrichtung der Abstand benachbarter LEDs verringert, was den beschriebenen Eindruck eines in Längsrichtung kontinuierlich verlaufenden Leuchtmittels weiter verbessert.

In einer weiteren Ausführungsform kann es auch zweckmäßig sein, Leuchtdioden in Bezug auf ihre jeweilige, Licht emittierende Oberfläche mit unterschiedlichem Kippwinkel zur Öffnungsebene der Abdeckung anzuordnen. Dabei kann dieser Kippwinkel von benachbarten LEDs einer LED-Reihe unterschiedlich sein. Es ist jedoch auch möglich, bei paralleler Anordnung einer Mehrzahl von LED-Reihen, z.B. zwei LED-Reihen, den Kippwinkel innerhalb einer LED-Reihe gleich einzustellen, jedoch unterschiedlich zu dem Kippwinkel einer anderen, insbesondere einer benachbarten LED-Reihe. Beispielsweise liegt es im Rahmen der Erfindung, bei zwei LED-Reihen eine V-förmige Anordnung der beiden LED-Reihen zueinander zu wählen, was für bestimmte Beleuchtungsaufgaben vorteilhaft sein kann.

Um die Effizienz der Lichtführung weiter zu verbessern, kann vorgesehen sein, die lichtbrechenden Strukturen, d.h. die innere Mantelfläche der Abdeckung und die äußere Mantelfläche der Abdeckung mit einer insbesondere breitbandigen Antireflexbeschichtung zu versehen, sodass möglichst viel Licht in determinierter Art und Weise durch Brechung an den beschriebenen Grenzflächen gelenkt werden kann, ohne dass hohe Lichtanteile über Reflexion an den Grenzflächen verloren gehen. Für die Gestaltung der Abdeckung der erfindungsgemäßen Leuchte sind eine Vielzahl von Materialien denkbar, insbesondere PMMA, PC oder auch Mischungen derselben. Diese Materialien weisen insbesondere neben ihrer Transparenz und Stabilität den Vorteil auf, dass sie durch Spritzgießen bzw. Spritzprägen verarbeitbar sind.

Auch für die Gestaltung des Leuchtengrundkörpers ist grundsätzlich je nach Ausführungsform eine Vielzahl von Materialien verwendbar. Beispielsweise kann ein solcher Grundkörper aus einem geeigneten Kunststoff hergestellt sein, es ist jedoch auch möglich, den Leuchtengrundkörper aus Metall herzustellen, wobei der Grundkörper vorteilhafterweise als direkter oder indirekter Kühlkörper für die von den LEDs erzeugte Abwärme eingerichtet sein kann. Auch die Verwendung von Verbundwerkstoffen ist denkbar.

Die Erfindung wird im Folgenden durch das Beschreiben einer Ausführungsform unter Bezugnahme auf die beiliegenden Figuren erläutert, wobei
- Figur 1a: eine erfindungsgemäß gestaltete Leuchte in einer perspektivischen Ansicht,
- Figur 1b: die Leuchte in einer Seitenansicht,
- Figur 1c: die Leuchte in einer perspektivischen Unteransicht,
- Figur 2: eine Schnittdarstellung der Leuchte gemäß Fign. 1a, b, c senkrecht zur Längsachse bei einem Schnitt etwa mittig zur Längserstreckung der Leuchte,
- Figur 3: eine Schnittdarstellung ähnlich der Figur 2 bei einer zur den vorherigen Figuren leicht abgeänderten Ausführungsform einer erfindungsgemäßen Leuchte, wobei die von einer LED ausgehenden Lichtstrahlen dargestellt sind,
- Figur 4: eine Detailansicht aus Figur 3 zur Erläuterung einer prismatischen Strukturierung an der Innenmantelfläche und einer glatten bzw. unstrukturierten Außenmantelfläche der Abdeckung,
- Figur 5: die Lichtstärkeverteilung in der Ebene senkrecht zur Längsachse für die beispielhafte Ausgestaltung der in den Figuren 1a bis 1c und 2 angegebenen erfindungsgemäßen Leuchte,
- Figur 6a - d: verschiedene Ausführungsvarianten bezüglich der Gestaltung der Abdeckung einer erfindungsgemäßen Leuchte,
- Figur 7: eine schräge Seitenansicht auf eine beispielhafte Innenmantelstrukturierung der Abdeckung für eine erfindungsgemäße Leuchte und
- Figur 8: eine seitliche Aufsicht der Abdeckung gemäß Figur 7
zeigt.

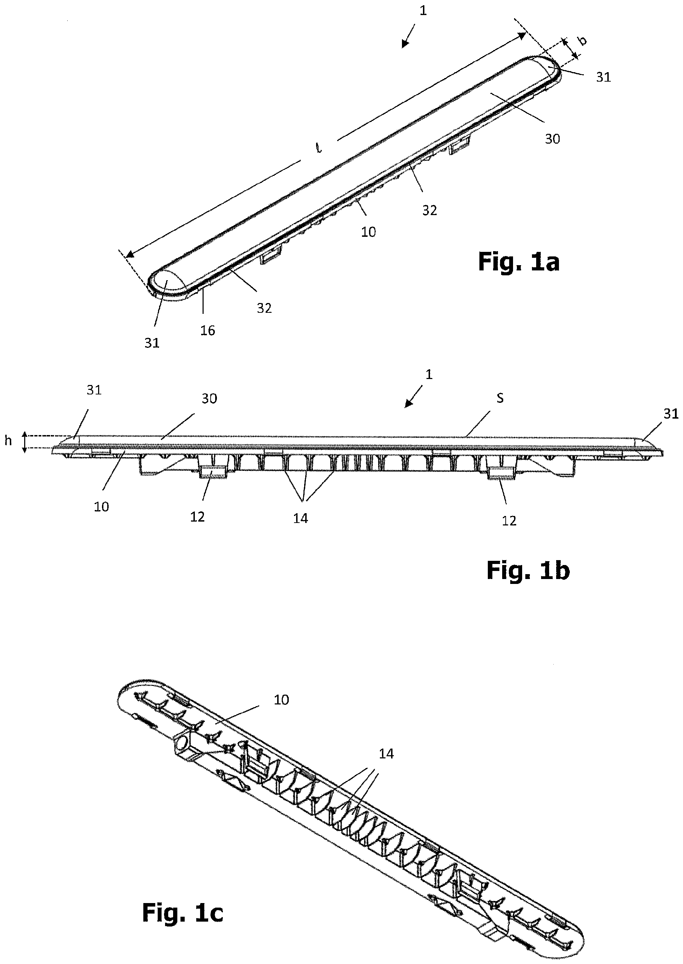

Im Folgenden wird eine erfindungsgemäß gestaltete Leuchte in der Ausführung einer Feuchtraumleuchte bzw. einige Abwandlungen hiervon erläutert. Eine derartige Leuchte ist in den Figuren 1a bis 1c maßstabsgetreu wiedergegeben. Die Leuchte wird durch einen metallischen Grundkörper 10 sowie eine darauf aufgesetzte Abdeckung 30 gebildet. Wie aus den Figuren erkennbar, ist die Länge der Lampe l sehr viel größer als deren Breite b, wobei die Breite l wiederum sehr viel größer als die Höhe der Abdeckung h ist, was zu einem kompakten Erscheinungsbild der Leuchte führt. Die Breite b der Leuchte bzw. der Abdeckung beträgt mindestens das Doppelte der Höhe h der Abdeckung.

Sowohl der Grundkörper 10 als auch die Abdeckung 30 verlaufen an ihren Längsseiten gerade, ohne jegliche Ausbuchtung in Querrichtung, wobei eine derartige Gestaltung jedoch auch im Rahmen der Erfindung liegt. Die beiden Längsseiten bzw. Längsseitenabschnitte gehen im Scheitel S der Abdeckung ineinander über. Stirnseitig der Abdeckung sind die Längsseitenabschnitte mittels Endabschnitte oder Endkappen 31 verbunden.

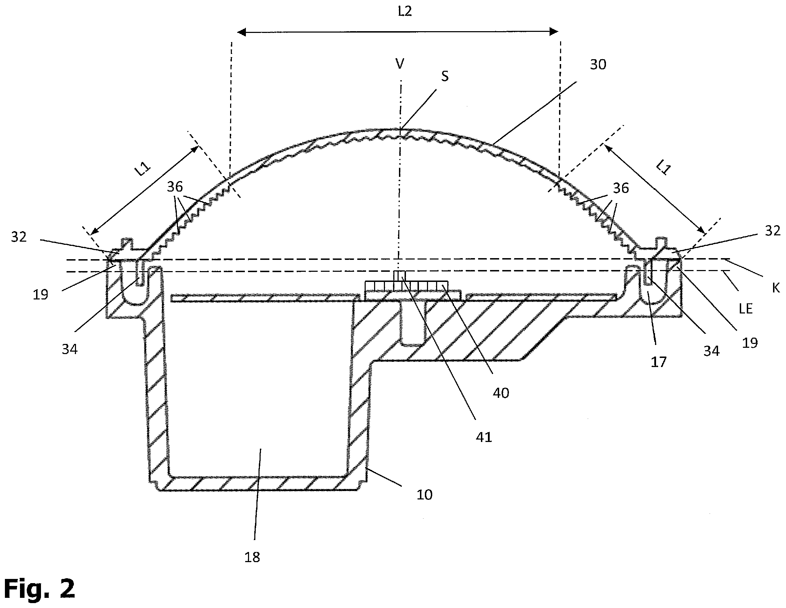

Der Grundkörper 10 und die Abdeckung 30 fluchten etwa in Bezug auf ihre Längs- bzw. Quererstreckung, wobei eine Befestigung der Abdeckung 30 am Grundkörper 10 mittels nichtdargestellter Klemmen durchgeführt wird, die schwenkbar am Grundkörper 10 befestigt sind, nach dem Umschwenken in der Ausnehmung 16 des Grundkörpers 10 zur Anlage kommen und den Rand 32 der Abdeckung unter Aufbringung eines Anpressdrucks auf dem Quersteg 32 anpressen. Weitere diesbezügliche Erläuterungen erfolgen untenstehend mit Bezug auf Figur 2.

In der angegebenen Ausführungsform weist der Grundkörper 10 Kühlrippen 14 sowie Befestigungslaschen 12 auf. Die Kühlrippen 14 dienen zur Abführung der von dem Leuchtmittel erzeugten Abwärme. Hierzu sind die hintereinander und über die gesamte Länge l mit Ausnahme der beiden Endkappen- oder Endabschnitte 31 angeordneten LEDs mit hoher Wärmeleitung an den Grundkörper 10 angekoppelt. Beispielsweise können die LEDs auf eine Keramikplatine angeordnet sein, welche am Grundkörper 10 befestigt ist. Als Platinenmaterial hierzu eignet sich insbesondere auch FR4 bzw. CEM3. In einer weiteren Ausführungsform kann auch vorgesehen sein, die in Reihe angeordneten LEDs ohne eigenes Chipgehäuse direkt auf der jeweiligen Platine aufzubringen (COB:chip on board). In einer weiteren Ausführungsform kann auch vorgesehen sein, die in Reihe angeordneten LEDs direkt auf dem Grundkörper 10 der Leuchte anzubringen.

In der beschriebenen Ausführungsform ist die Abdeckung 30 vollständig aus einem transparenten Material hergestellt. Wesentlich ist, dass die Bereiche, welche optisch zur Lichtleitung und -lenkung beitragen, aus einem transparenten Material bestehen. Vorliegend wurde die Abdeckung mittels eines Spritzprägeverfahrens hergestellt, wobei die Abdeckung vollständig aus transparentem PMMA besteht.

Figur 2 zeigt die in den Figuren 1a bis 1c angegebene, erfindungsgemäß gestaltete Leuchte in einem Schnitt quer zur Längsachse etwa in der Mitte der Leuchte. Der Grundkörper 10 weist einen Kanal 18 zur Aufnahme von elektrischen bzw. elektronischen Versorgungskomponenten auf, wobei an beiden Querenden und an den Längsenden des Grundkörpers Dichtungsaufnahmen 17 vorgesehen sind, welche eine nicht dargestellte, umlaufende Dichtungsraupe aufnehmen, in welche die Abdeckung mit einem Dichtsteg 34, der als Fortsatz der Wanderstreckung der Abdeckung 30 ausgebildet ist, hineinragt und den durch die Abdeckung und dem Grundkörper 10 gebildeten Innenraum vollständig abschließt. Im Bereich des Ansatzes des Dichtsteges 34 ist ein Quersteg 32 vorgesehen, welcher auf dem äußersten umlaufenden Auflagesteg 19 des Grundkörpers 10 aufliegt. Diese Auflageebene definiert eine Koppelebene zwischen der Abdeckung und dem Grundkörper und fällt in der beschriebenen Ausführungsform mit der Öffnungsebene der Abdeckung zusammen, da der Quersteg 32 einen Abschnitt der Lichtlenkstruktur darstellt. Der auch umlaufende Quersteg 32 der Abdeckung ist endstämmig bzw. in Querrichtung außen, mit einer Abschrägung versehen.

Auf dem Grundkörper 10 ist in der beschriebenen Ausführungsform eine sich im Wesentlichen über die gesamte Länge der Lampe erstreckende Platine angeordnet, auf welcher die in Reihe hintereinander platzierten LEDs 41 angebracht sind. Der Abstand zwischen den einzelnen LEDs (Mitte-Mitte) ist konstant und beträgt hier einige Millimeter, beispielsweise 5 oder 7 mm.

In der dargestellten Ausführungsform ist die Abdeckung 30 an ihrer Außenmantelfläche gekrümmt ausgebildet, wobei die Oberfläche jedoch glatt ist und keine besondere Strukturierung aufweist. Dem gegenüber sind in den betrachteten Lichtlenkzonen L1, L2 lichtbrechende Strukturen in Form einer Vielzahl von, an den Längsseitenabschnitten der Abdeckung längs verlaufenden, rippenförmigen Strukturen 36 vorgesehen, die in der beschriebenen Ausführungsform im Querschnitt dreieckig ausgebildet und mit einer entsprechenden Gestaltung der Innenmantelflächen der Kappen 31 umlaufend an der Innenmantelfläche der gesamten Abdeckung 30 angeordnet sind. Die angegebenen Lichtlenkzonen L1, L2 sind in Bezug auf ihre durch Brechung verursachte Lichtlenkfunktion so eingestellt, dass eine vorgegebene Lichtverteilungsfunktion erreicht ist, worauf untenstehend noch näher eingegangen wird. Eine Lichtlenkzone L1, L2 besteht dabei aus einer Mehrzahl solcher längs verlaufenden, hier im Querschnitt rippenartig prismatische Strukturen 36, welche quer zur Längsrichtung zueinander benachbart und aufeinanderfolgend angeordnet sind.

In der Figur sind zwei horizontal verlaufende Ebenen dargestellt. Die mit dem Bezugszeichen K gekennzeichnete Ebene bezeichnet die Öffnungsebene der Abdeckung 30 bzw. eine Ebene ab welcher in Richtung zum Scheitel S der Abdeckung 30 verlaufend, diese optisch wirkende Flächen für die Lichtlenkung durch Brechung des Lichtes bereitstellt. Dem gegenüber ist eine LED-Ebene LE des Gehäuses 10 angegeben, welche parallel zur Öffnungsebene der Abdeckung 30 liegt und durch die Lage der am Grundkörper 10 befestigten LEDs definiert ist, wobei diese Lage der LEDs in vertikaler Richtung durch deren emittierenden Oberflächen festgelegt ist. Das Bezugszeichen V bezeichnet die vertikale Achse der Leuchte, die Längsschnittebene der Abdeckung wird durch diese vertikale Achse sowie die hierzu senkrecht verlaufende Längsachse der Leuchte bzw. der Abdeckung gebildet und verläuft durch die in Längsrichtung der Leuchte hintereinander angeordneten Leuchtdioden 41. Erfindungsgemäß ist das Leuchtmittel in Form der hintereinander angeordneten LEDs etwa im Bereich der Öffnungsebene K der Abdeckung angeordnet, vorliegend etwas unterhalb dieser Ebene, so dass das von der LED-Reihe abgestrahlte Licht vollständig und direkt auf die Abdeckung trifft und von dieser in vorgegebener Art und Weise durch Brechung an den beschriebenen Grenzflächen gelenkt bzw. geführt werden kann.

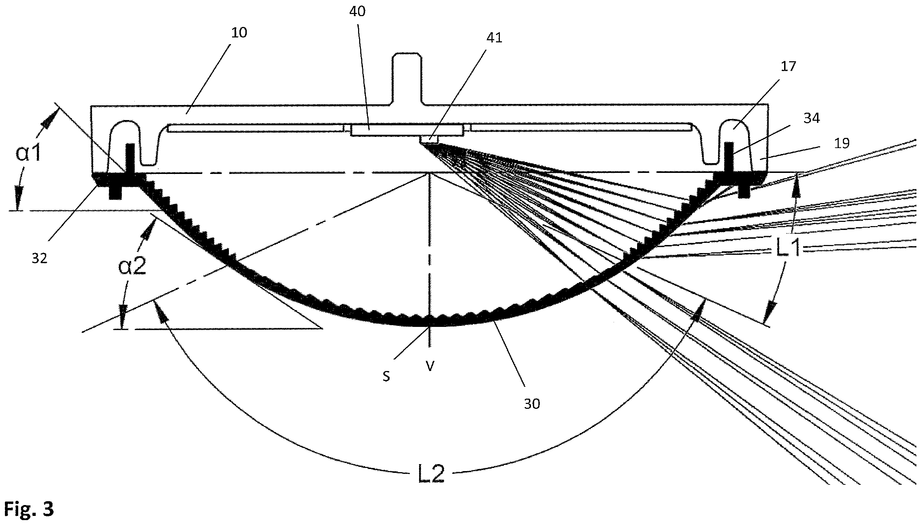

Figur 3 zeigt eine ähnliche Darstellung wie Figur 2 in Form eines Schnittes senkrecht zur Längsachse der Leuchte, wobei die längs verlaufenden Rippenstrukturen als lichtbrechende Prismenstrukturen, welche umfänglich in der Schnittdarstellung der Figur 3 aufeinanderfolgen, ausgebildet sind. In der beschriebenen Ausführungsform umfassen diese längs verlaufenden Strukturen dreieckförmige Prismensegmente, bei welchen Begrenzungsflächen als Wirkfläche für die Brechung des Lichtes wirken. Dabei ist die Lichtlenkzone L1 mit Bezug auf die als Punktstrahler wirkenden LEDs 41 so berechnet, dass das innerhalb diesen Bereichs auf die Innenmantelfläche auffallende Licht in Richtung zur Öffnungsebene K, siehe Figur 2, gebrochen wird und dieses schneidet. Hierdurch wird eine hohe Blendwirkung über einen Winkelbereich von über 33 Grad erzielt, wobei das dort durch Brechung herausgelenkte Licht im montierten Zustand der Leuchte zur Decke gestrahlt wird und damit zur indirekten Beleuchtung dient. Die beschriebene Gestaltung der erfindungsgemäßen Leuchte führt zu einer äußerst flachen Leuchte, wobei die Steigung der Abdeckung der Leuchte nahe zur Öffnungsebene K ohne Weiteres einen Winkel α1 kleiner 50 Grad aufweisen kann und sich diese Steigung im weiteren Verlauf bis zum Scheitel weiter verringert. Je nach Ausführungsform kann die Steigung der Außenwandung der Abdeckung zur Horizontalen an dem zum Scheitel der Abdeckung zugewandten Rand der Lichtlenkzone L1 einen Winkel α2 zwischen 30 Grad und 44 Grad aufweisen.

In der beschriebenen Ausführungsform beträgt die Höhe h der Abdeckung, gemessen von dem Scheitelpunkt S bis zur Öffnungs- bzw. Koppelebene K weniger als die Hälfte der Breite B der Abdeckung.

Das zu vorgegebenen Beleuchtungszwecken direkt verwendete Licht fällt in der beschriebenen Ausführungsform in der Lichtlenkzone L2 auf die Innenmantelfläche der Abdeckung auf und wird wiederum durch Zusammenspiel der Brechung an den lichtbrechenden Strukturen an der Innenmantelfläche, d.h. den längs verlaufenden prismatischen Strukturen und der lichtbrechenden Gestaltung an der Außenmantelfläche, hier der unstrukturierten, glatten Außenmantelfläche der Abdeckung in vorgegebener Weise durch die Lichtbrechung gelenkt. Hierzu sind die längs verlaufenden prismatischen Strukturen an der Innenmantelfläche und die Krümmung der Außenmantelfläche der Abdeckung innerhalb der Lichtlenkzone L2 entsprechend gestaltet.

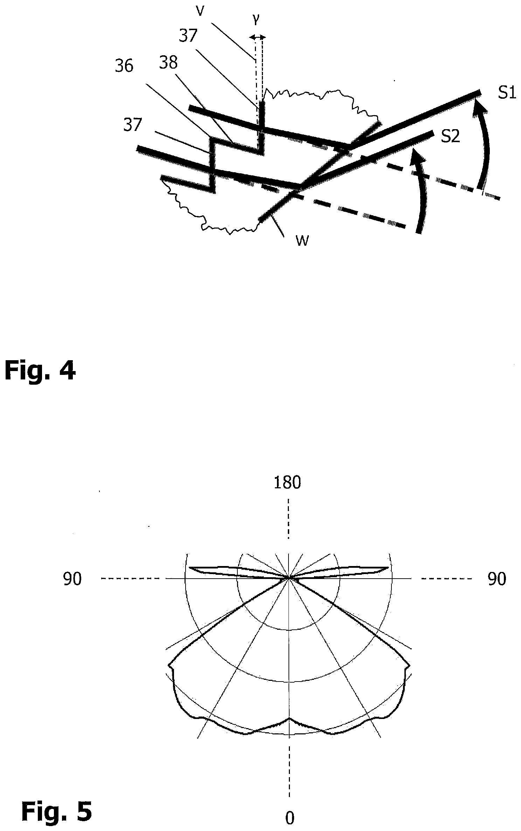

Figur 4 zeigt einen innerhalb der Lichtlenkzone L1 liegenden Ausschnitt der Wand W der Abdeckung, welche außen unstrukturiert, d.h. glatt, und innen längs verlaufende prismatische Strukturen aufweist, hier im Längsschnitt dargestellt. Wie erkennbar, weisen die prismatischen Strukturen einen dreieckigen Querschnitt auf, wobei die beiden Seitenflächen der Prismenabschnitte durch eine Hauptwirkfläche 37 und eine Nebenwirkfläche 38 gebildet sind. Wie erkennbar, verlaufen die Strahlen der beschriebenen Ausführungsform etwa parallel zu den Nebenwirkflächen, so dass diese zur Brechung nicht wesentlich beitragen. Dem gegenüber dienen die Hauptwirkflächen 37 als Einkoppelflächen für das Licht und werden an diesen gebrochen und nach Durchlaufen der Wand der Abdeckung W an der äußern Wandoberfläche wiederum gebrochen, vorliegend derartig, dass sie die Öffnungsebene K der Abdeckung schneiden und keine Blendung eines seitlich angeordneten Betrachters verursachen.

Aus Figur 4 geht darüber hinaus der Winkel γ der Hauptwirkfläche 37 mit der Vertikalen V hervor, welcher zumindest im Bereich von ≥ 1,5 Grad liegen sollte, um eine Entformbarkeit des Werkstückes im Spritzprägewerkzeug zu ermöglichen. Je nach Ausführungsform kann dieser Winkel γ der erfindungsgemäß gestalteten Leuchte mit Abdeckung zweckmäßigerweise zwischen 15 Grad und 1,5 Grad betragen, um die Entformbarkeit bereitzustellen.

Die erfindungsgemäße Leuchte ermöglicht eine hohe Präzision bei der Lenkung bzw. Führung des direkten Lichtes, siehe Figur 5, welche die Lichtstärkeverteiler der beschriebenen Leuchte in Leuchtenquerrichtung zeigt. Wie zu erkennen, kann mit der beschriebenen Leuchte ein hoher Entblendungswinkel von etwa 30 Grad erreicht werden, wobei das Licht aus dem entblendeten Winkelbereich zur Decke gelenkt wird und somit zur indirekten Beleuchtung verwendet werden kann.

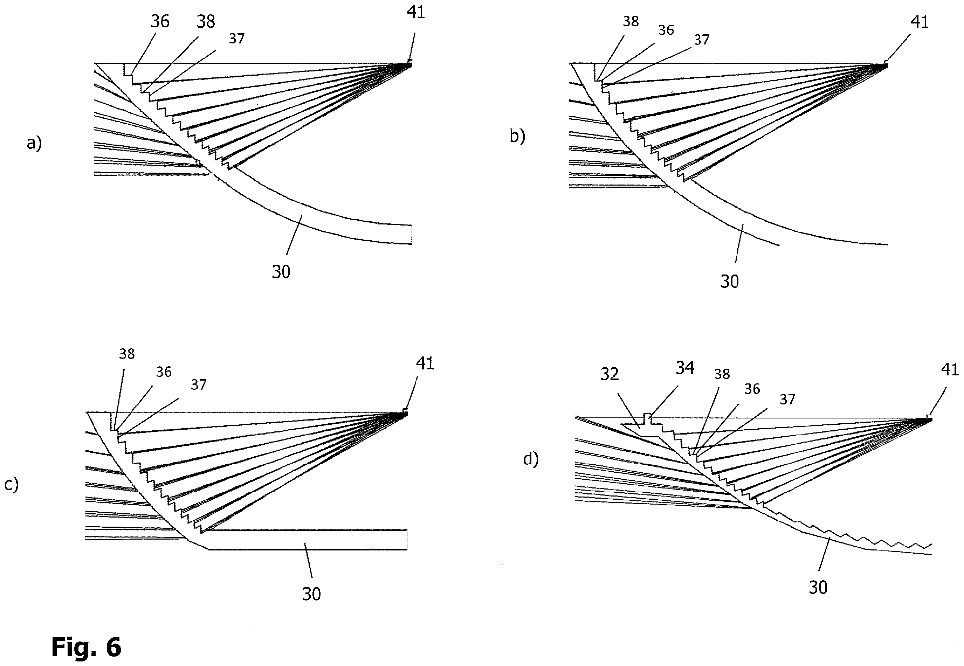

Figuren 6a bis 6d zeigen verschiedene Ausführungsformen der Abdeckung zur Gestaltung einer erfindungsgemäß ausgebildeten Leuchte. Allen Ausführungsformen ist gemein, dass sie vergleichsweise flach sind und gleichzeitig sichergestellt ist, dass Licht aus einem Winkelbereich von etwa 0 bis 30 Grad aus dem Sichtfeld des seitlichen Betrachters durch Brechung herausgelenkt wird. Die Ausführungsformen der Darstellungen 6a und 6b unterscheiden sich durch eine unterschiedliche Krümmung α im Bereich der Öffnungsebene, siehe Figur 3.

In den gezeigten Ausführungsformen sind die längs verlaufenden prismatischen Strukturen so angeordnet, dass die von der jeweiligen LED 41 ausgehenden Lichtstrahlen etwa parallel zu den mit Bezug auf Figur 4 beschriebenen Nebenwirkflächen 38 verlaufen, d.h. die Ebenen der Nebenwirkflächen 38 schneiden sich in der Reihenanordnung der LEDs, d.h. der diesbezüglichen Geraden.

Bei der Ausführungsform gemäß Figur 6c verläuft die Abdeckungswand ab der Lichtlenkzone L1 horizontal. Figur 6d zeigt den Strahlenverlauf für die Lichtlenkzone L1 in der Ausführungsform gemäß Figur 2, wobei die optische Funktion des Querstegs 32 mittels der Darstellung eines beispielhaften Lichtstrahls angegeben ist. Aufgrund der Abschrägung am radialen Rand erfolgt auch bei dem im Quersteg 32 verlaufenden Lichtstrahl eine Brechung in Richtung zur Öffnungsebene K, siehe Figur 2.

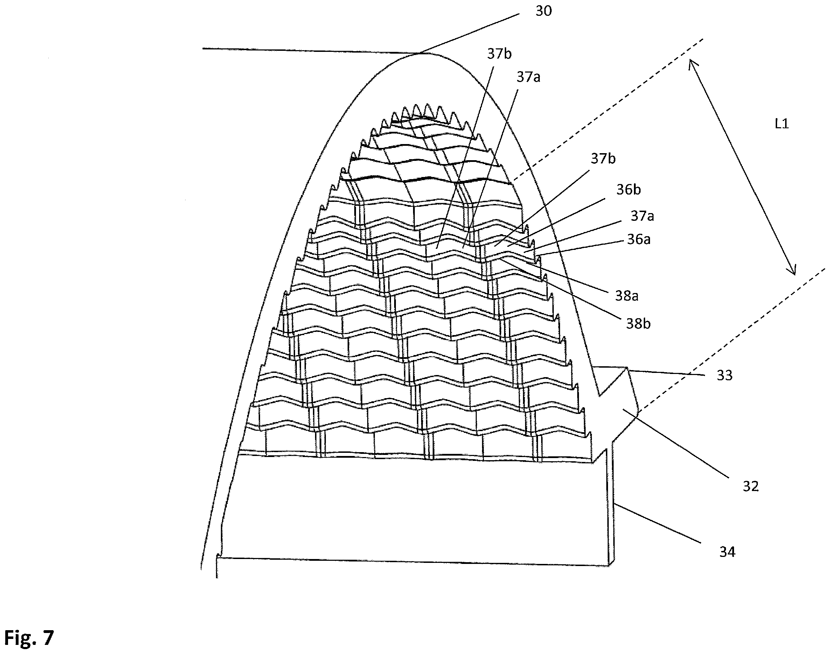

Figur 7 zeigt eine Seitenansicht auf die innere Mantelfläche einer Abdeckung 30 zur Gestaltung der erfindungsgemäßen Leuchte etwa längsmittig der Abdeckung. Im Unterschied zu den bisherigen Darstellungen in Bezug auf die Strukturierung an der inneren Mantelfläche der Abdeckung weist die gezeigte Strukturierung eine Anordnung auf, welche nicht nur die in Querrichtung zur Leuchte vorliegende Lichtverteilung gemäß Figur 5 erzeugt, sondern darüber hinaus beim Betrachter der Eindruck eines in Längsrichtung durchgängigen Leuchtmittels hervorruft. Zu diesem Zweck sind die, in den Längsseitenabschnitten der Abdeckung längs verlaufenden, hier dreieckförmigen Prismenstrukturen in sich einander anschließende Prismensegmente 36a, b differenziert, welche bezüglich ihrer Prismenkanten einen Winkel zueinander einnehmen. Die Hauptwirkflächen 37a, b der Prismensegmente 36a, b weisen einen unterschiedlichen Winkel zur Längsachse auf, während die Nebenwirkflächen 38a, b parallel zueinander angeordnet sind.

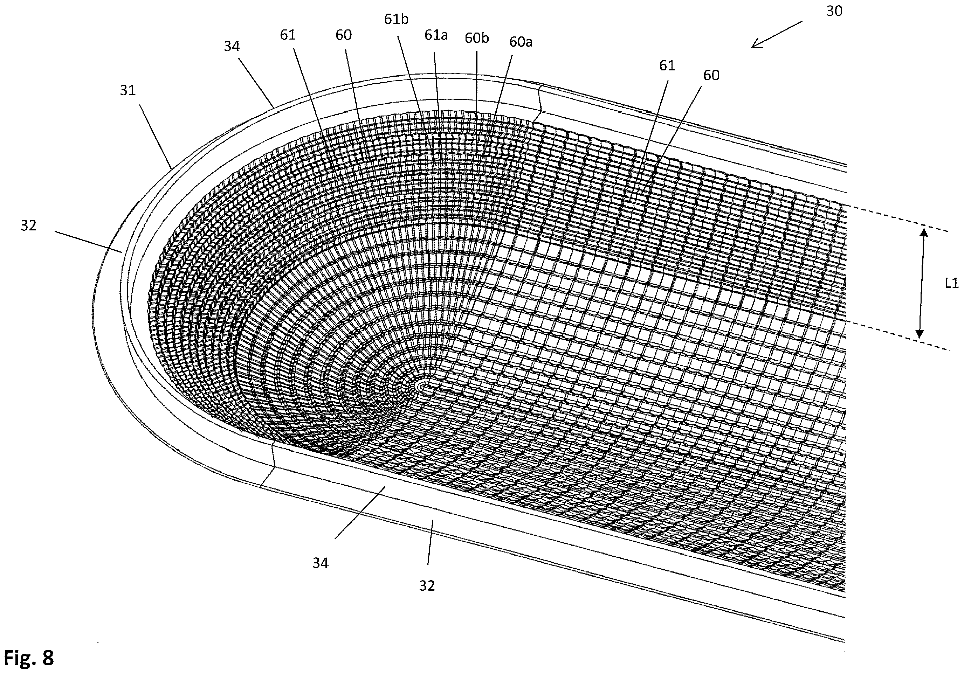

Diese Prismensegmentabfolge verläuft jeweils um eine parallel zur Längsrichtung erstreckende Achse, derartig, dass die Segmente der jeweiligen, rippenformigen und im Wesentlichen längs verlaufenden Struktur um diese Achse hin und her verlaufen. Eine einzelne, in den Längsseitenabschnitten der Abdeckung längs verlaufende Prismenstruktur setzt sich insofern aus einer Vielzahl derartiger Abfolgen von einander anschließenden Prismensegmenten 36a, b zusammen. Die Wirkflächen 37a, b weisen dabei jeweils den gleichen Winkel zur Vertikalen V auf, so dass sie in Bezug auf die Brechung in Querrichtung die gleiche Lichtlenkeigenschaften zeigen. Dem gegenüber unterscheiden sie sich im Hinblick auf die Ablenkung des jeweiligen Lichtstrahls in Bezug auf die Längsachse, so dass mit der beschriebenen Strukturierung eine Auffächerung des jeweiligen Lichtes einer LED an der beschriebenen Prismenstruktur erfolgt. Die angegebenen Prismensegmente 36a, b verlaufen demnach zickzackförmig um eine Achse, welche parallel zur Längsachse der Leuchte bzw. der Abdeckung 30 orientiert ist. In der beschriebene Ausführungsform sind diese Prismenstrukturen nicht nur in den Längsseitenabschnitten der Abdeckung, sondern auch in der Innenmantelfläche der beiden Endkappen 31 wie beschrieben moduliert, wobei die Zickzackanordnung der Prismensegmente dort nicht um die Längsachse der Abdeckung, sondern jeweils um eine Umfangslinie einer Endkappe als Weiterführung der prismatischen Struktur in einem Längsseitenabschnitt der Abdeckung verläuft, worauf untenstehend mit Bezug auf Fig. 8 näher eingegangen wird.

Die in Figur 7 gezeigte Strukturierung an der Innenmantelfläche der Abdeckung 30 entspricht somit der Lichtlenkrippenstruktur gemäß Figur 3, wobei bei der in Figur 7 angegebenen Ausführungsform sowohl in den Seitenabschnitten als auch den Endkappenabschnitten der Abdeckung eine zusätzliche Modulation in Querrichtung erfolgt, um die Punktstrahler des Leuchtmittels in Längsrichtung aufzulösen und den gewünschten Eindruck eines durchgehenden Leuchtmittels in Längsrichtung zu erzeugen.

Eine Aufsicht auf die innen an der Abdeckung gestalteten lichtbrechenden Strukturen gemäß Figur 7 ist in Figur 8 angegeben. Wie gezeigt, verlaufen die beschriebenen Strukturen endseitig zur Abdeckung auch an den die Abdeckung stirnseitig abschließenden Endkappen 31, siehe Fig. 1a, so dass sich auch an den Stirnseiten der Lampe die gewünschte Abblendfunktionalität ergibt. Wie schon obenstehend erläutert, verlaufen die rippenförmigen, prismatischen Strukturen 60, 61, welche quer zur Längsrichtung zueinander benachbart und aufeinanderfolgend angeordnet sind, auf der Innenmantelfläche der Abdeckung 30 umlaufend, d.h. auch innerhalb der Endkappen 31. Eine einzelne Struktur 60 bzw. 61 verläuft demnach in der Innenmantelfläche der Abdeckung in einer Ebene, hier einer Ebene, welche parallel zur Öffnungsebene orientiert ist.

Um auch in Bezug auf die beiden Kappen 31 der Abdeckung einen möglichst homogenen und zu anderen Bereichen der Abdeckung, insbesondere zu den Längsseitenabschnitten, identischen Lichteindruck zu erzeugen, ist bei der beschriebenen Ausführungsform vorgesehen, dass die Länge einzelner Segmente 60a, 60b bzw. 61 a, 61b an der Innenfläche der Kappe in Umfangsrichtung jeweils innerhalb eines vorgegebenen Bereichs liegt. Beispielsweise kann je nach Ausführungsform vorgesehen sein, dass die Länge dieser Prismensegmente in Umfangsrichtung zur Kappe nur um 20%, oder in einer anderen Ausführungsform um maximal 10% unterschiedlich ist. Da sich der Umfangsradius an der Innenmantelfläche der Kappe 31 mit Abstand zum Scheitel der Abdeckung ändert, bedeutet dies, dass sich die Anzahl der Prismensegment bzw. der Prismensegmentabfolgen innerhalb einer rippenförmigen Struktur 61, 60 in den Kappen 31 mit zunehmender Nähe zum Scheitel der Abdeckung vermindert. Die Länge der Modulationsabschnitte (Prismensegmente) ist dabei etwa auf die Länge der zugeordneten Modulationsabschnitte (Prismenabschnitte) außerhalb der Kappenabschnitte, d.h. in den Längsseitenabschnitten der Abdeckung 30 eingestellt.

### Bezugszeichenliste

- 1: Leuchte
- 10: Grundkörper
- 12: Befestigungslasche
- 14: Kühlrippen
- 16: Ausnehmung
- 17: Dichtungsaufnahme
- 18: Kanal
- 19: Auflagesteg
- 30: Abdeckung
- 31: Endkappe
- 32: Quersteg
- 33: Schrägfläche
- 34: Dichtsteg
- 36: Prismatische Struktur
- 36a, b: Prismensegment
- 37: Hauptwirkfläche
- 37a, b: Hauptwirkfläche
- 38: Nebenwirkfläche
- 38a, b: Nebenwirkfläche
- 40: LED-Platine
- 41: LED
- 60: Prismatische Struktur
- 60a,b: Prismensegment
- 61: Prismatische Struktur
- 61a,b: Prismensegment
- α1, α1: Steigungswinkel
- b: Breite
- l: Länge
- h: Höhe
- L1, L2: Lichtlenkzone
- K: Öffnungsebene der Abdeckung
- LE: LED-Ebene
- S: Scheitel der Abdeckung
- V: Vertikalachse
- W: äußere Wandoberfläche

## Patentansprüche

1. Leuchte (1), insbesondere Feuchtraumleuchte, mit einem länglichen Grundkörper (10) und einer wannenförmigen und zumindest abschnittsweise transparenten Abdeckung (30), wobei der Grundkörper das Leuchtmittel umfassend eine Mehrzahl von in Längsrichtung hintereinander angeordnete Leuchtdioden (41) trägt, und die Abdeckung an beiden Längsseiten zumindest eine Lichtlenkzone umfasst mit einer Mehrzahl von, an der Innenmantelfläche der Abdeckung angeordnete und quer zur Längsrichtung aufeinanderfolgende, lichtbrechenden Strukturen (36, 60, 61) jeweils in Form von längs verlaufenden, prismatische Strukturen und einer an der Außenmantelfläche der Abdeckung angeordneten lichtbrechenden Gestaltung, wobei Leuchtdioden (41) etwa auf einer Schnittgeraden zwischen der Längsschnittebene der Abdeckung und deren Öffnungsebene (K) angeordnet sind
**dadurch gekennzeichnet, dass**
von den Leuchtdioden abgestrahltes Licht direkt auf die Innenmantelfläche der Abdeckung (30) trifft, und dadurch, **dass** längs verlaufende prismatische Strukturen (36, 60, 61) einer Lichtlenkzone (L1, L2) in Längsrichtung moduliert sind zum Auffächern der Lichtanteile der Leuchtdioden (41) in Längsrichtung der Leuchte.

2. Leuchte (1) nach Anspruch 1, **dadurch gekennzeichnet, dass** eine zur Öffnungsebene (K) nächstgelegene Lichtlenkzone (L1) an der Abdeckung (30) ausgebildet ist zum Ablenken des, aus einem vorgegebenen Winkelbereich zur Öffnungsebene (K), insbesondere einem Winkelbereich von etwa Null bis 30 Grad zur Öffnungsebene, abgestrahlten direkten Lichtes der Leuchtdioden (41) in eine Richtung, welche eine horizontale Ebene, insbesondere die Öffnungsebene, schneidet.

3. Leuchte (1) nach Anspruch 1 oder 2, **dadurch gekennzeichnet, dass** die Außenmantelfläche der Abdeckung in der zur Öffnungsebene nächstgelegenen Lichtlenkzone (L1) an deren Randabschnitt, welcher dem Scheitelpunkt (S) der Abdeckung zugewandt ist, eines Steigungswinkel (α2) < 45 Grad zur Horizontalen im Einbauzustand aufweist.

4. Leuchte (1) nach Anspruch 1, 2 oder 3, **dadurch gekennzeichnet, dass** die Außenmantelfläche der Abdeckung (30) in der zur Öffnungsebene (K) nächstgelegenen Lichtlenkzone (L1) an deren Randabschnitt, welcher dem Scheitel (S) der Abdeckung (30) zugewandt ist, einen Steigungswinkel (α2) zur Horizontalen im Einbauzustand aufweist, die zwischen 24 Grad und 39 Grad, insbesondere zwischen 30 Grad und 38 Grad liegt.

5. Leuchte (1) nach Anspruch 3 und 4, **dadurch gekennzeichnet, dass** die die Außenmantelfläche der Abdeckung (30) in der zur Öffnungsebene (K) nächstgelegenen Lichtlenkzone (L1) an deren Randabschnitt, welcher dem Scheitel der Abdeckung abgewandt ist, einen Steigungswinkel (α1) zwischen 48 und 88 Grad zur Horizontalen aufweist.

6. Leuchte (1) nach einem der Ansprüche 1 bis 5, **dadurch gekennzeichnet, dass** längs verlaufenden Strukturen (36, 60 61) an der Innenmantelfläche der Abdeckung (30) jeweils eine das einfallende Licht zur Öffnungsebene hin brechende Hauptwirkfläche (37, 37a, 37b) aufweisen.

7. Leuchte (1) nach Anspruch 6, **dadurch gekennzeichnet, dass** die prismatischen Strukturen an der Innenmantelfläche der Abdeckung einen dreieckigen Querschnitt aufweisen, wobei Seitenflächen der Prismenabschnitte durch die jeweilige Hauptwirkfläche (37, 37a, 37b) sowie eine zugeordnete Nebenwirkfläche (38, 38a, 38b) gebildet sind, und sich Ebenen der Nebenwirkflächen einer Lichtlenkzone (L1) etwa am Ort der hintereinander angeordneten Leuchtdioden (41) schneiden.

8. Leuchte (1) nach Anspruch 6 oder 7, **dadurch gekennzeichnet, dass** die das einfallende Licht zur Öffnungsebene (K) hin brechenden, Hauptwirkflächen (37, 37a, 37b) zur Vertikalen einen Winkel zwischen 15 Grad und 1 Grad, insbesondere < 5 Grad und > 1 Grad aufweisen.

9. Leuchte (1) nach einem der Ansprüche 1 bis 8, **dadurch gekennzeichnet, dass** der Steigungswinkel der Außenmantelfläche der zur Öffnungsebene (K) nächstgelegene Lichtlenkzone (L1) ausgehend von dem der Öffnungsebene zugewandten Rand zunächst konstant ist und sich mit zunehmender Nähe zur Scheitellinie (S) der Abdeckung (30) bei einer vorgegebenen Seitenhöhe kontinuierlich oder sprunghaft verändert.

10. Leuchte (1) nach einem der Ansprüche 1 bis 9, **dadurch gekennzeichnet, dass** eine längs verlaufende prismatische Struktur (36; 60; 61) eine Vielzahl von in Längsrichtung hintereinander angeordnete Prismensegmente (36a, 36b; 60a, 60b; 61a, 61b) aufweist, wobei äquivalente Wirkflächen, insbesondere Hauptwirkflächen (37a, 37b), benachbarter Prismensegmente (36a, 36b) den gleichen Winkel zur Vertikalen (V), jedoch einen unterschiedlichen Winkel zur Längsachse aufweisen.

11. Leuchte (1) nach einem der Ansprüche 1 bis 9, **dadurch gekennzeichnet, dass** eine längs verlaufenden prismatische Struktur (36; 60; 61) eine Vielzahl von in Längsrichtung hintereinander angeordnete Prismensegmente (36a, 36b; 60a, 60b; 61a, 61b) aufweist, wobei äquivalente Wirkflächen, insbesondere Nebenwirkflächen (38a, 38b), benachbarter Prismensegmente parallel zueinander verlaufen.

12. Leuchte (1) nach einem der Ansprüche 1 bis 11, **dadurch gekennzeichnet, dass** die innere Mantelfläche einer Abdeckung eine V-förmige oder wellenförmige Struktur aufweist.

13. Leuchte (1) nach einem der Ansprüche 1 bis 12, **dadurch gekennzeichnet, dass** die Abdeckung (30) einen umlaufenden, optisch wirksamen Quersteg (32) aufweist, welcher eine Schrägfläche (33) aufweist sowie eine Anlagefläche zur Anlage auf dem Grundkörper (10).

14. Leuchte (1) nach einem der Ansprüche 1 bis 13, **dadurch gekennzeichnet, dass** das Leuchtmittel zumindest zwei parallel verlaufende Reihen einer Mehrzahl von in Längsrichtung hintereinander angeordneten Leuchtdioden trägt, wobei die Schnittgerade zwischen der Längsschnittebene der Abdeckung (30) und der Öffnungsebene (K) der Abdeckung in Querrichtung etwa mittig zum Leuchtmittel verläuft.

15. Leuchte (1) nach einem der Ansprüche 1 bis 14, **dadurch gekennzeichnet, dass** Leuchtdioden in Bezug auf ihre jeweilige, Licht emittierende Oberfläche mit unterschiedlichem Kippwinkel zur Öffnungsebene (K) der Abdeckung (30) angeordnet werden.

16. Abdeckung (30), ausgebildet für eine Leuchte (1) nach einem der Ansprüche 1 bis 15.

## Claims

1. Luminaire (1), in particular damp-proof luminaire, with an oblong basic body (10) and a trough-shaped and at least partially transparent cover (30), wherein the basic body that comprises the lighting means carries a multitude of luminescent diodes (41) placed the one behind the other in longitudinal direction and the cover comprises on both longitudinal sides at least one light directing area with a multitude of refractive structures (36, 60, 61) placed on the inner shell surface of the cover and consecutive transversely to the longitudinal direction respectively in the form of longitudinally extending prismatic structures and a refractive shaping placed on the outer shell surface of the cover, wherein luminescent diodes (41) are placed approximately on an intersection line between the longitudinal section plane of the cover and the opening plane (K) thereof, **characterized in that** light emitted by the luminescent diodes strikes directly onto the inner shell surface of the cover (30) and **in that** longitudinally extending prismatic structures (36, 60, 61) of a light directing area (L1, L2) are modulated in longitudinal direction for fanning out the light portions of the luminescent diodes (41) in longitudinal direction of the luminaire.

2. Luminaire (1) according to claim 1, **characterized in that** a light directing area (L1) nearest to the opening plane (K) is configured on the cover (30) for deflecting direct light of the luminescent diodes (41) emitted from a predefined angular range with the opening plane (K), in particular an angular range of approximately zero to 30 degrees with the opening plane, to a direction that intersects with a horizontal plane, in particular the opening plane.

3. Luminaire according to claim 1 or 2, **characterized in that** the outer shell surface of the cover (30) has a lead angle (α2) < 45 degrees with the horizontal when mounted, in the light directing area (L1) closest to the opening plane on its edge portion that is turned to the apex (S) of the cover.

4. Luminaire (1) according to claim 1, 2 or 3, **characterized in that** the outer shell surface of the cover (30) has a lead angle (α2) with the horizontal when mounted that is situated between 24 degrees and 39 degrees, in particular between 30 degrees and 38 degrees, in the light directing area (L1) closest to the opening plane (K) on the edge portion thereof that is turned to the apex (S) of the cover (30).

5. Luminaire (1) according to claim 3 and 4, **characterized in that** the outer shell surface of the cover (30) has a lead angle (α1) with the horizontal between 48 and 88 degrees in the light directing area (L1) closest to the opening plane (K) on the edge portion thereof that is opposite the apex of the cover.

6. Luminaire (1) according to one of the claims 1 to 5, **characterized in that** longitudinally extending structures (36, 60, 61) on the inner shell surface of the cover (30) have a main effective surface (37, 37a, 37b) each that refracts the incident light towards the opening plane.

7. Luminaire (1) according to claim 6, **characterized in that** the prismatic structures have a triangular cross section on the inner shell surface of the cover, wherein lateral surfaces of the prismatic portions are formed by the respective main effective surface (37, 37a, 37b) as well as an associated auxiliary effective surface (38, 38a, 38b) and planes of the auxiliary effective surfaces of a light directing area (L1) intersect approximately at the location of the luminescent diodes (41) placed the one behind the other.

8. Luminaire (1) according to claim 6 or 7, **characterized in that** the main effective surfaces (37, 37a, 37b) that refract the incident light towards the opening plane (K) have an angle with the vertical between 15 degrees and 1 degree, in particular < 5 degrees and > 1 degree.

9. Luminaire (1) according to one of the claims 1 to 8, **characterized in that** the lead angle of the outer shell surface of the light directing area (L1) closest to the opening plane (K) is first constant, starting from the edge turned to the opening plane, and continuously or sharply varies with increasing proximity to the apex line (S) of the cover (30) for a predefined side height.

10. Luminaire (1) according to one of the claims 1 to 9, **characterized in that** a longitudinally extending prismatic structure (36; 60; 61) has a multitude of prism segments (36a, 36b; 60a, 60b; 61a, 61b) placed the one behind the other in longitudinal direction, wherein equivalent effective surfaces, in particular main effective surfaces (37a, 37b) of adjacent prism segments (36a, 36b) have the same angle with the vertical (V), however a different angle with the longitudinal axis.

11. Luminaire (1) according to one of the claims 1 to 9, **characterized in that** a longitudinally extending prismatic structure (36; 60; 61) has a multitude of prism segments (36a, 36b; 60a, 60b; 61a, 61b) placed the one behind the other in longitudinal direction, wherein equivalent effective surfaces, in particular auxiliary effective surfaces (38a, 38b) of adjacent prism segments, are parallel to each other.

12. Luminaire (1) according to one of the claims 1 to 11, **characterized in that** the inner shell surface of a cover has a V-shaped or a wave-like structure.

13. Luminaire (1) according to one of the claims 1 to 12, **characterized in that** the cover (30) has a circumferential optically effective crossbar (32) that has an inclined surface (33) as well as a bearing surface for bearing on the basic body (10).

14. Luminaire (1) according to one of the claims 1 to 13, **characterized in that** the lighting means carries at least two parallel extending rows of a multitude of luminescent diodes placed the one behind the other in longitudinal direction, wherein the intersection line extends between the longitudinal section plane of the cover (30) and the opening plane (K) of the cover in transverse direction approximately in the middle of the lighting means.

15. Luminaire (1) according to one of the claims 1 to 14, **characterized in that** luminescent diodes are placed with respect to their respective light emitting surface with a different tilt angle to the opening plane (K) of the cover (30).

16. Cover (30) designed for a luminaire (1) according to one of the claims 1 to 15.

## Revendications

1. Luminaire (1), en particulier luminaire pour locaux humides, avec un corps de base allongé (10) et un recouvrement (30) en forme de cuve et au moins partiellement transparent, cependant que le corps de base qui comprend le moyen d'éclairage porte une multitude de diodes luminescentes (41) placées l'une derrière l'autre dans le sens longitudinal et le recouvrement comprend sur les deux côtés longitudinaux au moins une zone de guidage de la lumière avec une multitude de structures réfringentes (36, 60, 61) placées sur la surface d'enveloppe intérieure du recouvrement et se suivant transversalement par rapport au sens longitudinal, respectivement sous forme de structures prismatiques s'étendant dans le sens longitudinal, et un aménagement réfringent placé sur la surface d'enveloppe extérieure du recouvrement, cependant que des diodes luminescentes (41) sont placées à peu près sur une droite d'intersection entre le plan de coupe longitudinal du recouvrement et son plan d'ouverture (K), **caractérisé en ce que** de la lumière émise par les diodes luminescentes tombe directement sur la surface d'enveloppe intérieure du recouvrement (30) et **en ce que** des structures prismatiques qui s'étendent dans le sens longitudinal (36, 60, 61) d'une zone de guidage de la lumière (L1, L2) sont modulées dans le sens longitudinal pour disperser en éventail des fractions de lumière des diodes luminescentes (41) dans le sens longitudinal du luminaire.

2. Luminaire (1) selon la revendication 1, **caractérisé en ce qu'**une zone de guidage de la lumière (L1) située à proximité du plan d'ouverture (K) est configurée sur le recouvrement (30) pour dévier la lumière directe des diodes luminescentes (41) émise à partir d'une plage angulaire prédéfinie par rapport au plan d'ouverture (K), en particulier d'une plage angulaire d'environ zéro à 30 degrés par rapport au plan d'ouverture dans une direction qui coupe un plan horizontal, en particulier le plan d'ouverture.

3. Luminaire (1) selon la revendication 1 ou 2, **caractérisé en ce que** la surface d'enveloppe extérieure du recouvrement (30) présente un angle d'inclinaison (a2) < 45 degrés par rapport à l'horizontale, à l'état monté, dans la zone de guidage de la lumière (L1) située à proximité du plan d'ouverture (K) sur sa portion marginale qui est tournée vers le sommet (S) du recouvrement (40).

4. Luminaire (1) selon la revendication 1, 2 ou 3, **caractérisé en ce que** la surface d'enveloppe extérieure du recouvrement (30) présente un angle d'inclinaison (a2) par rapport à l'horizontale, à l'état monté, qui est entre 24 degrés et 39 degrés, en particulier entre 30 degrés et 38 degrés, dans la zone de guidage de la lumière (L1) située à proximité du plan d'ouverture (K) sur sa portion marginale qui est tournée vers le sommet (S) du recouvrement (40),

5. Luminaire (1) selon la revendication 3 et 4, **caractérisé en ce que** la surface d'enveloppe extérieure du recouvrement (30) présente un angle d'inclinaison (α1) entre 48 et 88 degrés par rapport à l'horizontale, dans la zone de guidage de la lumière (L1) située à proximité du plan d'ouverture (K) sur sa portion marginale qui est opposée au sommet du recouvrement.

6. Luminaire (1) selon l'une des revendications 1 à 5, **caractérisé en ce que** des structures qui s'étendent dans le sens longitudinal (36, 60, 61) sur la surface d'enveloppe intérieure du recouvrement (30) présentent respectivement une surface active principale (37, 37a, 37b) qui réfracte la lumière incidente vers le plan d'ouverture.

7. Luminaire (1) selon la revendication 6, **caractérisé en ce que** les structures prismatiques présentent, sur la surface d'enveloppe intérieure du recouvrement une section triangulaire, cependant que des surfaces latérales des portions de prisme sont formées par la surface active principale respective (37, 37a, 37b) ainsi qu'une surface active secondaire associée (38, 38a, 38b) et que des plans des surfaces actives secondaires d'une zone de guidage de la lumière (L1) se coupent approximativement à l'endroit des diodes luminescentes placées l'une derrière l'autre (41).

8. Luminaire (1) selon la revendication 6 ou 7, **caractérisé en ce que** les surfaces actives principales (37, 37a, 37b) qui réfractent la lumière incidente vers le plan d'ouverture (K) présentent un angle entre 15 degrés et 1 degré, en particulier < 5 degrés et > 1 degré, par rapport à la verticale.

9. Luminaire (1) selon l'une des revendications 1 à 8, **caractérisé en ce que** l'angle d'inclinaison de la surface d'enveloppe extérieure de la zone de guidage de la lumière (L1) située à proximité du plan d'ouverture (K) est tout d'abord constant en partant du bord tourné vers le plan d'ouverture et varie en continu ou brusquement plus on se rapproche de la ligne de sommet (S) du recouvrement (30), pour une hauteur latérale prédéfinie.

10. Luminaire (1) selon l'une des revendications 1 à 9, **caractérisé en ce qu'**une structure prismatique qui s'étend dans le sens longitudinal (36, 60, 61) présente une multitude de segments de prisme (36a, 36b ; 60a, 60b ; 61a, 61b) placés l'un derrière l'autre dans le sens longitudinal, cependant que des surfaces actives équivalentes, en particulier des surfaces actives principales (37a, 37b), de segments de prisme voisins (36a, 36b) présentent le même angle avec la verticale (V), toutefois un angle différent par rapport à l'axe longitudinal.

11. Luminaire (1) selon l'une des revendications 1 à 9, **caractérisé en ce qu'**une structure prismatique qui s'étend dans le sens longitudinal (36, 60, 61) présente une multitude de segments de prisme (36a, 36b ; 60a, 60b ; 61a, 61b) placés l'un derrière l'autre dans le sens longitudinal, cependant que des surfaces actives équivalentes, en particulier des surfaces actives secondaires (38a, 38b), de segments de prisme voisins s'étendent parallèlement l'une à l'autre.

12. Luminaire (1) selon l'une des revendications 1 à 11, **caractérisé en ce que** la surface d'enveloppe intérieure d'un recouvrement présente une structure en forme de V ou une structure ondulée.

13. Luminaire (1) selon l'une des revendications 1 à 12, **caractérisé en ce que** le recouvrement (30) présente une baguette transversale (32) périphérique à effet optique qui présente une surface inclinée (33) ainsi qu'une surface d'appui pour l'appui sur le corps de base (10).

14. Luminaire (1) selon l'une des revendications 1 à 13, **caractérisé en ce que** le moyen d'éclairage porte au moins deux rangées parallèles l'une à l'autre d'une multitude de diodes luminescentes placées l'une derrière l'autre dans le sens longitudinal, cependant que la droite d'intersection entre le plan de coupe longitudinale du recouvrement (30) et le plan d'ouverture (K) du recouvrement passe dans le sens transversal à peu près au milieu par rapport au moyen d'éclairage.

15. Luminaire (1) selon l'une des revendications 1 à 14, **caractérisé en ce que** des diodes luminescentes sont placées avec un angle de basculement différent vers le plan d'ouverture (K) du recouvrement (30) par rapport à leur surface respective qui émet de la lumière.

16. Recouvrement (30) configuré pour un luminaire (1) selon l'une des revendications 1 à 15.
